# EUROPEAN PATENT APPLICATION

(11) **EP 2 444 169 A1**
(43) Date of publication of application: **25.04.2012**
(21) Application number: 11185389.1
(22) Date of filing: 17.10.2011
(51) Int. Cl.: B21C 23/00, B21J 5/02, B21J 5/06, C22F 1/18

(54) **A system and method for near net shape forging**

(30) Priority: 25.10.2010 US 911099
(71) Applicant: General Electric Company, Schenectady, NY 12345 (US)
(72) Inventor: Mathai, Manu, 600100 Tamil Nadu (IN); Stonitsch, Raymond Joseph, Greenville, SC South Carolina 29615 (US)
(74) Representative: Williams, Andrew Richard

(57) **Abstract**

A method for near net shape forging a titanium component includes heating a titanium billet (12) to a temperature in the alpha-beta temperature range and extruding the titanium billet (12) into a first die (18) having a temperature approximately 260°C (500°F) below the temperature of the titanium billet (12). A system (10) for near net shape forging a titanium component includes a titanium billet (12) having a temperature in the alpha-beta temperature range and a punch (14) in contact with the titanium billet (12). A first die (18) proximate to the titanium billet (12) for receiving the titanium billet (12) has a temperature approximately 260°C (500°F) below the temperature of the titanium billet (12).

## Description

### FIELD OF THE INVENTION

The present invention generally involves a system and method for near net shape forging. In particular, embodiments of the present invention provide a system and process for near net shape forging titanium components in the alpha-beta temperature range.

### BACKGROUND OF THE INVENTION

Commercial equipment often includes components made from titanium or titanium alloys. For example, compressors and turbines typically include alternating stages of stationary vanes and rotating blades. In aircraft engines and gas turbines, the compressor and turbine rotating blades often have relatively complex and curved profiles forged from high strength, light weight titanium or titanium alloys. In particular, the rotating blades may be forged from titanium alloys in the alpha-beta temperature range.

Near net shape forging is a technique in which the initial shape of an item is very close ("near") to the final ("net") shape. Near net shape forging, for example, deforms a billet into an initial shape requiring little or no surface machining or grinding to achieve a final shape. However, near net shape forging of titanium alloys in the alpha-beta temperature range typically requires expensive die materials that can withstand the elevated forging temperatures of the alpha-beta temperature range. Specifically, the die temperature is typically maintained at or near the billet temperature of approximately 1,600°F to 1,800°F, depending on the particular titanium alloy, during near net shape forging of titanium alloys in the alpha-beta temperature range to minimize any cooling of the titanium billet during the forging process. The near net shape forging process is typically performed in a vacuum to maintain near isothermal conditions between the die and the billet during the forging process. The high cost of the die and associated equipment often prevents near net shape forging from being a cost-effective option for forging titanium components in the alpha-beta temperature range. As a result, compressor and turbine rotating blades made from titanium and titanium alloys are often forged in a multi-step process that includes open die forging, closed die forging, one or more heat treatments, and expensive finishing. This multi-step process results in a large amount of material wastage, additional finishing costs, and less than optimal grain structure in the finished product.

Presently, no forging technology exists for near net shape forging of titanium or titanium alloys in the alpha-beta temperature range without requiring elevated die temperatures at or near the alpha-beta temperature range. Therefore, an improved method for near net shape forging of titanium and titanium alloys in the alpha-beta temperature range that does not require die temperatures to be at or near the alpha-beta temperature range would be useful.

### BRIEF DESCRIPTION OF THE INVENTION

Aspects and advantages of the invention are set forth below in the following description, or may be obvious from the description, or may be learned through practice of the invention.

One embodiment of the present invention is a method for near net shape forging a titanium component. The method includes heating a titanium billet to a temperature in the alpha-beta temperature range and extruding the titanium billet into a first die having a temperature approximately at least 500°F below the temperature of the titanium billet.

Another embodiment of the present invention is a method for near net shape forging a titanium component that includes heating a titanium billet to a temperature in the alpha-beta temperature range and creating a differential temperature between the titanium billet and a first die of approximately at least 500°F.

The present invention also includes a system for near net shape forging a titanium component. The system includes a titanium billet having a temperature in the alpha-beta temperature range and a punch in contact with the titanium billet. A first die proximate to the titanium billet for receiving the titanium billet has a temperature approximately at least 500°F below the temperature of the titanium billet.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
Figures 1, 2, and 3 illustrate a system for near net shape forging according to one embodiment of the present invention;
Figures 4 and 5 illustrate a system for near net shape forging according to second embodiment of the present invention;
Figures 6, 7, and 8 illustrate a system for near net shape forging according to a third embodiment of the present invention; and
Figures 9 and 10 illustrate a system for near net shape forging according to a fourth embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention provide a system and method for near net shape forging titanium, including titanium alloys, in the alpha-beta temperature range. In particular embodiments, a titanium billet in the alpha-beta temperature range is radially and sequentially extruded through or into a die while the temperature of the die is maintained well below the alpha-beta temperature range for titanium. The rate of extrusion can be controlled to regulate the amount of adiabatic heating created in the billet to approximately equal the amount of heat lost or transferred to the lower temperature die. In addition, the rate and sequence of the extrusion process may be controlled to impart a desired grain size and flow and/or residual compressive stress in the deformed billet. The grain size and flow directly affect cycle fatigue properties of the deformed billet, and the residual compressive stresses enhance the crack growth resistance of the deformed billet. In combination, the sequential extrusion process thus allows a single deformed billet to have grains with different sizes and orientations and residual compressive stresses at different locations in the deformed billet. Although various embodiments of the present invention are described and illustrated in the context of a titanium billet forged into a dovetail or blade of a compressor or turbine blade, one of ordinary skill in the art will readily appreciate that the present invention is not limited to a particular billet material or end product unless specifically recited in the claims.

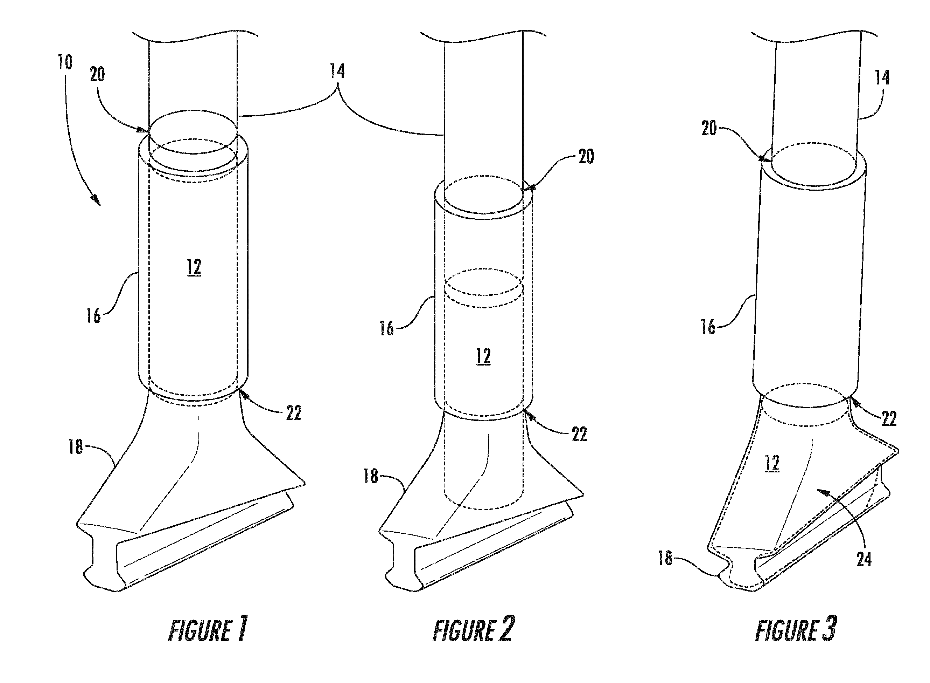

Figures 1, 2, and 3 illustrate a system 10 and method for near net shape forging according to one embodiment of the present invention. As shown, the system 10 generally includes a billet 12, a punch 14, an extrusion container 16, and a die 18. The billet 12 may comprise titanium or titanium alloy heated to a temperature in the alpha-beta temperature range using any heat source known to one of ordinary skill in the art. The actual temperature of the alpha-beta temperature range depends on the particular titanium alloy being used and may be approximately 1,600-1,800°F, depending on the particular titanium alloy being used. The punch 14 is in contact with the billet 12 and may be connected to any suitable press (not shown) known in the art for supplying a desired force or strain to the punch 14 to extrude the billet 12 through the extrusion container 16 into or through the die 18. The extrusion container 16 provides a volume for holding the billet 12 prior to extrusion and may comprise any suitable structure capable of withstanding temperatures in the alpha-beta temperature range for the particular titanium alloy being used. The die 18 is proximate to the billet 12 for receiving the billet 12 and provides the desired shape for the forged billet 12. The die 18 may comprise any suitable structure capable of withstanding temperatures up to approximately 500-1,300°F.

As shown in Figure 1, the billet 12 may be contained within the extrusion container 16. The punch 14 may be located at a first opening 20, and the die 18 may be located at a second opening 22 of the extrusion container 16. In this manner, force applied to the punch 14 may move the punch 14 with respect to the extrusion container 16 and die 18 to extrude the billet 12 into or through the die 18, as progressively shown in Figures 2 and 3.

The die 18 may have a temperature substantially lower than the temperature of the billet 12 to reduce the cost of materials required for the die 18. For example, the die 18 may have a temperature approximately 500°F, 600°F, 1,000°F, or more below the temperature of the billet 12, creating a corresponding differential temperature between the die 18 and the billet 12 of approximately 500°F, 600°F, 1,000°F, or more. The temperature difference between the die 18 and the billet 12 results in conductive and/or convective cooling of the billet 12. The process parameters of the system 10 may be controlled or adjusted to regulate the amount of adiabatic heating created in the billet 12 during the extrusion process. For example, the size or diameter of the extrusion container 16 and/or the strain rate applied by the punch 14 may be controlled or adjusted to change the amount of adiabatic heating created in the billet 12 during the extrusion process to approximately match the heat transferred to the die 18. Depending on the particular system, titanium alloy, size of the die 18, and various other process parameters, adiabatic heating may increase the temperature of the billet 12 by 50°F, 70°F, or more. As a result, the system 10 maintains the temperature of the billet 12 in the alpha-beta temperature range during the extrusion process, producing a near net shape titanium dovetail 24, seen in figure 3, having a desired grain size and direction and requiring little or no grinding or other finishing process.

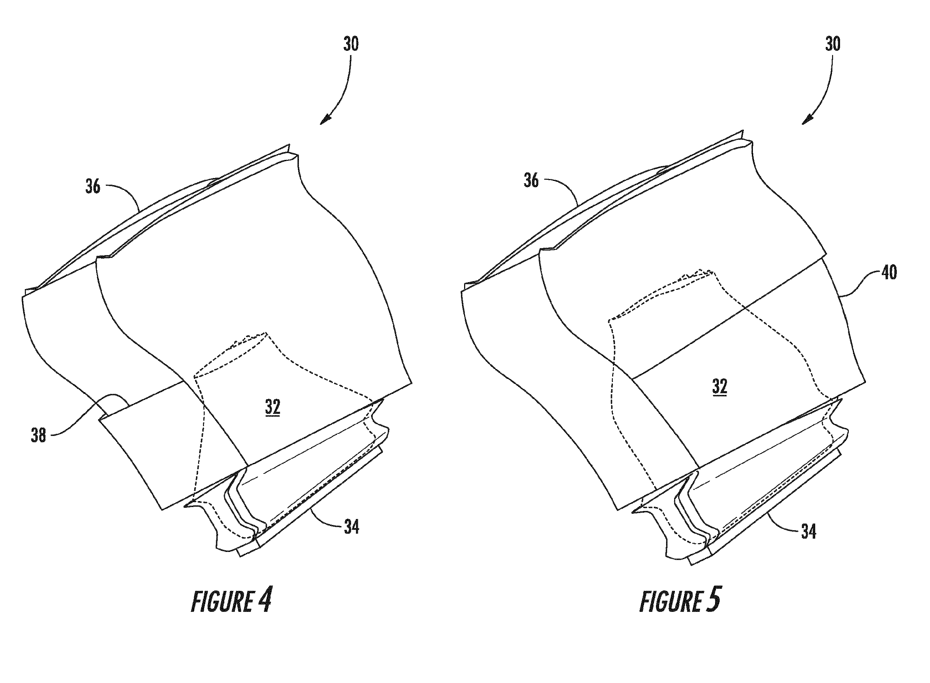

Figures 4 and 5 and 6, 7, and 8 illustrate a system 30 and method for intermediate forging according to alternate embodiments of the present invention. The system 30 shown in Figures 4 and 5 and Figures 6, 7, and 8 may be used in concert with or independent of the system 10 previously described and illustrated with respect to Figures 1, 2, and 3. For example, the titanium dovetail 24 produced using the system 10 described illustrated with respect to Figures 1, 2, and 3 may be further forged using either embodiment illustrated in Figures 4 and 5 or Figures 6, 7, and 8. Alternately, the system 30 illustrated in Figures 4 and 5 or Figures 6, 7, and 8 may be used as a stand alone system for forging an intermediate titanium billet.

The system 30 shown in Figures 4 and 5 and Figures 6, 7, and 8 generally includes a billet 32 as previously described with respect to Figures 1, 2, and 3. Specifically, the billet 32 may comprise titanium or titanium alloy heated to a temperature in the alpha-beta temperature range using any heat source known to one of ordinary skill in the art. In addition, the system 30 includes a stationary punch 34 and a die 36. The stationary punch 34 is in contact with and holds the billet 32 in place.

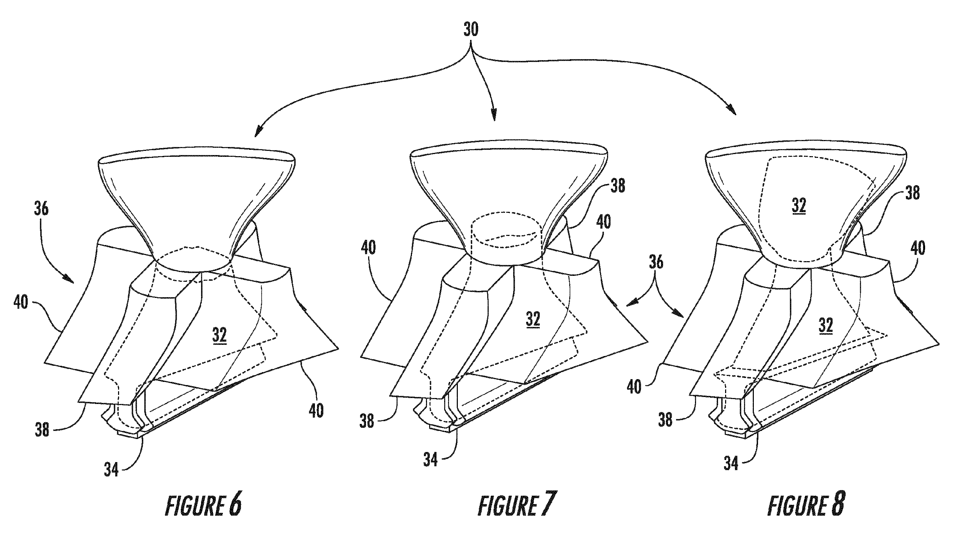

As shown in Figure 4 and 6, the die 36 is proximate to the billet 32 for receiving the billet 32 and provides the desired shape for the forged billet 32. The die 36 may comprise any suitable structure capable of withstanding temperatures up to approximately 500-1,300°F and may include multiple sections that may move sequentially and/or incrementally independent of one another. For example, as shown in Figures 4 and 5 and 6, 7, and 8, the die 36 may include a first section 38 and a second section 40. A press (not shown) may incrementally and/or sequentially move the first and second sections 38, 40 with respect to the stationary punch 34 to progressively extrude the billet 32 into or through the die 36. By incrementally and/or sequentially applying pressure to multiple sections of the die 36, the contact points between the die 36 and the billet 32 are reduced. As a result, the strain rates needed to forge the billet 32 are reduced, allowing a smaller capacity press to provide the desired strain rate for forging the billet 32. In addition, the incremental and/or sequential movement of the multiple sections of the die 36 creates desirable residual compressive stresses in the billet 32 that enhance crack growth resistance in the forged billet 32.

As with the die 18 described with respect to the first embodiment, the die 36 shown in Figures 4 and 5 and 6, 7, and 8 may have a temperature substantially lower than the temperature of the billet 32 to reduce the cost of materials required for the die 36. For example, the die 36 may have a temperature approximately 500°F, 600°F, 1,000°F, or more below the temperature of the billet 32, creating a corresponding differential temperature between the die 36 and the billet 32 of approximately 500°F, 600°F, 1,000°F, or more. The temperature difference between the die 36 and the billet 32 again results in conductive and/or convective cooling of the billet 32. As a result, the process parameters of the system 30 may again be controlled or adjusted to regulate the amount of adiabatic heating created in the billet 32 during the extrusion process. For example, the strain rate applied by the press alternately and/or sequentially to the first and second sections 38, 40 may be controlled or adjusted to change the amount of adiabatic heating created in the billet 32 during the extrusion process. Depending on the particular system, titanium alloy, size and number of sections 38, 40 of the die 36, and various other process parameters, adiabatic heating may increase the temperature of the billet 32 as needed to approximately match the heat transferred to the die 36. As a result, the system 30 again maintains the temperature of the billet 32 in the alpha-beta temperature range during the extrusion process, producing the intermediate billet 32 shown in Figures 5 and 8.

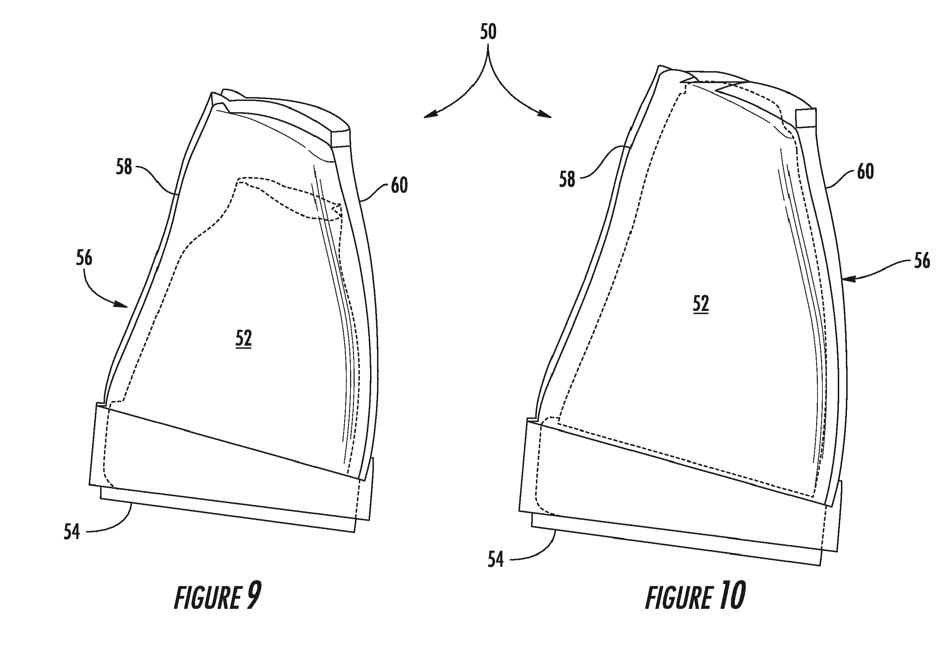

Figures 9 and 10 illustrate a system 50 for near net shape forging according to a fourth embodiment of the present invention. As with the previous embodiments, the system 50 shown in Figures 9 and 10 may be used in concert with or independent of the previously described and illustrated systems 10, 30. For example, the intermediate billet 32 produced using the system 30 described and illustrated with respect to Figures 4 and 5 or 6, 7, and 8 may be further forged using the embodiment illustrated in Figures 9 and 10 to produce a near net shape component.

The system 50 shown in Figures 9 and 10 generally includes a billet 52, stationary punch 54, and die 56 as previously described with respect to the embodiment shown in Figures 4 and 5 and 6, 7, and 8. Specifically, the billet 52 may comprise titanium or titanium alloy heated to a temperature in the alpha-beta temperature range using any heat source known to one of ordinary skill in the art. In addition, the stationary punch 54 is in contact with and holds the billet 52 in place, and the die 56 is again proximate to the billet 52 for receiving the billet 52.

The die 56 may comprise any suitable structure capable of withstanding temperatures up to approximately 500-1,300°F and may include multiple sections that may move sequentially and/or incrementally independent of one another. For example, as shown in Figure 9 and 10, the die 56 may include a first section 58 and a second section 60. A press (not shown) may incrementally and/or sequentially move the first and second sections 58, 60 with respect to the stationary punch 54 to progressively extrude the billet 52 into the die 56. By incrementally and/or sequentially applying pressure to multiple sections of the die 56, the contact points between the multiple sections of the die 56 and the billet 52 are reduced. As a result, the strain rates needed to forge the billet 52 are reduced, allowing a smaller capacity press to provide the desired strain rate for forging the billet 52. In addition, the incremental and/or sequential movement of the multiple sections of the die 56 creates desirable residual compressive stresses in the billet 56 that enhance crack growth resistance in the forged billet 52.

As with the previous embodiments, the die 56 may have a temperature substantially lower than the temperature of the billet 52 to reduce the cost of materials required for the die 56. For example, the die 56 may have a temperature approximately 500°F, 600°F, 1,000°F, or more below the temperature of the billet 52, creating a corresponding differential temperature between the die 56 and the billet 52 of approximately 500°F, 600°F, 1,000°F, or more. The temperature difference between the die 56 and the billet 52 again results in conductive and/or convective cooling to the billet 52. As a result, the process parameters of the system 50 may again be controlled or adjusted to regulate the amount of adiabatic heating produced in the billet 52 during the extrusion process. For example, the strain rate applied by the press alternately and/or sequentially to the first and second sections 58, 60 may be controlled or adjusted to change the amount of adiabatic heating created in the billet 52 during the extrusion process. Depending on the particular system, titanium alloy, size and number of sections 58, 60 of the die 56, and various other process parameters, adiabatic heating may increase the temperature of the billet 52 as needed to approximately match the heat transferred to the die 56. As a result, the system 50 again maintains the temperature of the billet 52 in the alpha-beta temperature range during the extrusion process, producing the near net shape billet 52, shown in Figure 10, having a desired grain size and orientation and residual compressive stresses and requiring little or no grinding or other finishing process.

One of ordinary skill in the art will readily appreciate that the previously described embodiments may be combined sequentially in any order to provide a system and method for forging a near net shape titanium component having complex curves. For example, the titanium billet 12 forged using the first die 18 described and illustrated with respect to Figures 1, 2, and 3 may be subsequently forged using the second die 36 described with respect to Figures 4 and 5 or 6, 7, and 8, and the intermediate titanium billet 32 may be subsequently forged using the third die 56 described with respect to Figures 9 and 10. As previously described, the sequence, amount, and strain rate applied to each die 18, 36, 56 may be adjusted or controlled to regulate the amount of adiabatic heat created in the forged billet, thus allowing the use of less expensive dies while still maintaining the temperature of the billet in the alpha-beta temperature range. In addition, the sequence, amount, and strain rate applied to each die 18, 36, 56 may be adjusted or controlled to produce a desired size, location, and orientation of grain structures and/or residual compressive stresses in the various titanium billets 12, 32, 52. As a result, the combination of embodiments previously described and illustrated may produce a titanium product with multiple zones having different grain and compressive stress characteristics without requiring additional finishing or processing. Lastly, the incremental and/or sequential movement of the dies results in reduced contact points between the dies and the billet, avoiding the need for presses having increased strain capabilities.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal languages of the claims.

Various embodiments of the present invention are indicated in the following clauses:
1. A method for near net shape forging a titanium component comprising:
   a. heating a titanium billet to a temperature in the alpha-beta temperature range; and
   b. extruding the titanium billet into a first die having a temperature approximately 500°F below the temperature of the titanium billet.
2. The method as in clause 1, further comprising extruding the titanium billet into the first die having a temperature approximately 600°F below the temperature of the titanium billet.
3. The method as in either clause 1 or 2, further comprising adiabatically heating the titanium billet.
4. The method as in any preceding clause, further comprising maintaining the temperature of the titanium billet in the alpha-beta temperature range.
5. The method as in any preceding clause, further comprising incrementally moving a first section of the first die against the titanium billet.
6. The method as in clause 5, further comprising incrementally moving a second section of the first die against the titanium billet.
7. The method as in any preceding clause, further comprising extruding the titanium billet into a second die, wherein the second die has a temperature approximately 500°F below the temperature of the titanium billet.
8. The method as in clause 7, further comprising incrementally moving a first section of the second die against the titanium billet.
9. The method as in clause 8, further comprising incrementally moving a second section of the second die against the titanium billet.
10. A method for near net shape forging a titanium component comprising:
   a. heating a titanium billet to a temperature in the alpha-beta temperature range; and
   b. creating a differential temperature between the titanium billet and a first die of approximately 500°F.
11. The method as in clause 10, further comprising adiabatically heating the titanium billet.
12. The method as in either of clause 10 or 11, further comprising extruding the titanium billet into the first die.
13. The method as in any of clauses 10 to 12, further comprising extruding the titanium billet into a second die, wherein the second die has a temperature approximately 500°F below the temperature of the titanium billet.
14. A system for near net shape forging a titanium component comprising:
   a. a titanium billet, wherein the titanium billet has a temperature in the alpha-beta temperature range;
   b. a punch in contact with the titanium billet; and
   c. a first die proximate to the titanium billet for receiving the titanium billet, wherein the first die has a temperature approximately 500°F below the temperature of the titanium billet.
15. The system as in clause 14, wherein the first die has a temperature approximately 600°F below the temperature of the titanium billet.
16. The system as in either clause 14 or 15, wherein the first die is configured to move with respect to the punch.
17. The system as in any one of clauses 14 to 16, wherein the first die comprises a first section and a second section.
18. The system as in clause 17, wherein the first section of the first die is configured to move independently of the second section of the first die.
19. The system as in any one of clauses 14 to 18, wherein only a portion of the first die is in contact with the titanium billet at a time.
20. The system as in any one of clauses 14 to 19, further comprising a second die that receives the titanium billet from the first die.

## Claims

1. A method for near net shape forging a titanium component comprising:
a. heating a titanium billet (12) to a temperature in the alpha-beta temperature range; and
b. extruding the titanium billet (12) into a first die (18) having a temperature approximately at least 500°F below the temperature of the titanium billet (12).

2. The method as in claim 1, further comprising extruding the titanium billet (12) into the first die (18) having a temperature approximately at least 600°F below the temperature of the titanium billet (12).

3. The method as in any preceding claim, further comprising adiabatically heating the titanium billet (12).

4. The method as in any preceding claim, further comprising maintaining the temperature of the titanium billet (12) in the alpha-beta temperature range.

5. The method as in any preceding claim, further comprising incrementally moving a first section (38) of the first die (18) against the titanium billet (12).

6. The method as in claim 5, further comprising incrementally moving a second section (40) of the first die (18) against the titanium billet (12).

7. The method as in any preceding claim, further comprising extruding the titanium billet (12) into a second die (36), wherein the second die (36) has a temperature approximately at least 500°F below the temperature of the titanium billet (12).

8. The method as in claim 7, further comprising incrementally moving a first section (38) of the second die (36) against the titanium billet (12).

9. The method as in claim 8, further comprising incrementally moving a second section (40) of the second die (36) against the titanium billet (12).

10. A system (10) for near net shape forging a titanium component comprising:
a. a titanium billet (12), wherein the titanium billet (12) has a temperature in the alpha-beta temperature range;
b. a punch (14) in contact with the titanium billet (12); and
c. a first die (18) proximate to the titanium billet (12) for receiving the titanium billet (12), wherein the first die (18) has a temperature approximately at least 500°F below the temperature of the titanium billet (12).

11. The system (10) as in claim 10, wherein the first die (18) is configured to move with respect to the punch (14).

12. The system (10) as in any of claims 10-11, wherein the first die (18) comprises a first section (38) and a second section (40).

13. The system (10) as in claim 12, wherein the first section (38) of the first die (18) is configured to move independently of the second section (40) of the first die (18).

14. The system (10) as in any of claims 12-13, wherein only a portion of the first die (18) is in contact with the titanium billet (12) at a time.

15. The system (10) as in any of claims 10-12, further comprising a second die (36) that receives the titanium billet (12) from the first die (18).
